# EUROPEAN PATENT APPLICATION

(11) **EP 0 877 510 A2**
(43) Date of publication of application: **11.11.1998**
(21) Application number: 98660037.7
(22) Date of filing: 27.04.1998
(51) Int. Cl.: H04L 12/28, H04L 12/56

(54) **Neighbouring cell measurement in a TDMA cellular radio network**

(30) Priority: 07.05.1997 FI 971958
(71) Applicant: NOKIA MOBILE PHONES LTD., 02150 Espoo (FI)
(72) Inventor: Raitola, Mika, 02600 Espoo (FI); Ranta, Pekka, 03100 Nummela (FI); Ranta, Jukka, 24280 Salo (FI); Jokinen, Harri, 25370 Hiisi (FI)
(74) Representative: Antila, Harri Jukka Tapani

(57) **Abstract**

An object of the invention is a method of measuring neighbouring cells in a TDMA cellular radio network using time hopping. A base station sends common control channels (CCCH) in at least one time slot of a TDMA frame down-link to a subscriber terminal. The subscriber terminal measures a neighbouring cell from the at least one time slot of the TDMA frame, the slot containing a common control channel (CCCH). The invention is characterized in that the at least one time slot to be measured of the TDMA frame, the slot containing a common control channel (CCCH), is transmitted without time hopping at a constant transmission power. A further object of the invention is a TDMA cellular radio network using time hopping.

## Description

### FIELD OF THE INVENTION

The invention relates to a method of measuring neighbouring cells in a TDMA cellular radio network using time hopping, in which network a base station sends common control channels downlink in at least one time slot of a TDMA frame to a subscriber terminal and the subscriber terminal measures a neighbouring cell from the at least one time slot of the TDMA frame, the slot containing a common control channel.

### BACKGROUND OF THE INVENTION

In a TDMA cellular radio network, a subscriber terminal has a two-way radio connection to a base station of a serving cell. Because the holder of the subscriber terminal is able to move within the area of the serving cell, even out of the cell to the area of a neighbouring cell, the system must be prepared for a handover, which means that the radio connection of the subscriber terminal to the base station of the serving cell is changed to a base station of the neighbouring cell, having a better coverage. A handover inside the cell can also be performed, if necessary. The radio connection to the base station of the serving cell is then maintained, the channels used for the radio connection are only changed for channels having a better coverage.

Preparations for a handover consist in that the subscriber terminal measures the power and/or quality of its radio connection to the base station of the serving cell, for instance the number of transmission errors, the capacity of the common control channels sent by the base station of as many neighbouring cells as possible.

In a GSM system, for instance, the common control channels of the downlink transmission path are BCCH (Broadcast Control Channel), FCCH (Frequency Correction Channel), SCH (Synchronization Channel), PCH (Paging Channel), AGCH (Access Grant Channel), SDCCH (Standalone Dedicated Control Channel) and SACCH (Slow Associated Control Channel). Additional information on the structure and purpose of these channels is available in the GSM Specifications and the book "An Introduction to GSM", by S.M. Redl, M.K. Weber, M.W. Oliphant, Artech House, London, 1995, ISBN 0-89006-785-6, Chapter 5.10, in particular.

In a GSM system, a subscriber terminal reports its measurement results to a base station at least once a second. In a GSM system, the number of the neighbouring cells to be measured is sixteen at the most. In general, the data of six neighbouring cells in an average are informed to the base station.

The subscriber terminal measures neighbouring cells during the pause between the preceding burst it has received from the downlink transmission path and the next burst it will send to the uplink transmission path, or between transmission and reception, respectively.

In GSM, the measurement problem has been solved in such a way that each base station transmits common control channels continuously at a predetermined frequency at a constant transmission power. The transmission shall take place irrespective of whether there actually is any payload to be transferred in the channel using a time slot at said frequency. At said frequency, no power control or discontinuous transmission is possible.

Several problems arise from this. Because the transmission power has to be constant, co-channel interference is caused to other base stations using the same frequency. Likewise, adjacent-channel interference may be caused to base stations using adjacent frequencies of said frequency.

Frequency hopping of control channels is not possible either. Frequency hopping means a technique in which a transmitter transmits for instance one time slot at a predetermined frequency, then the next time slot at some other frequency, a third time slot at some third frequency, and so on. A frequency hopping sequence consists of a predetermined amount of frequencies, according to which the transmitter sends each time slot. The frequency hopping sequence is then repeated sequentially. An advantage of frequency hopping consists primarily in that the transmissions can be spread evenly within the whole frequency range of the system, which reduces the average multiple access interference of each channel. Another obvious advantage is that, if some frequency of some connection suffers from fading, the other frequencies of the hopping sequence are probably not fading frequencies, whereby the effect of the fading on the quality of the radio connection lasts only during said time slot. By frequency hopping, the capacity of the system may be increased. The quality of radio connections can be improved likewise. Further, the coverage of transmissions can be extended.

**Table 1**

| **TS** | | | | | | | | | |
|---|---|---|---|---|---|---|---|---|---|
| | | **#0** | **#1** | **#2** | **#3** | **#4** | **#5** | **#6** | **#7** |
| | **#0** | A | B | C | D | E | F | G | H |
| | **#1** | H | A | B | C | D | E | F | G |
| | **#2** | G | H | A | B | C | D | E | F |
| | **#3** | F | G | H | A | B | C | D | E |
| | **#4** | E | F | G | H | A | B | C | D |
| **MF** | **#5** | D | E | F | G | H | A | B | C |
| | **#6** | C | D | E | F | G | H | A | B |
| | **#7** | B | C | D | E | F | G | H | A |
| | **#8** | A | B | C | D | E | F | G | H |
| | **#9** | H | A | B | C | D | E | F | G |
| | . | . | . | . | . | . | . | . | . |
| | **#50** | G | H | A | B | C | D | E | F |

Time hopping is another technique by which the capacity of the system can be increased. In time hopping, each transmitter in each TDMA frame changes according to a predetermined time hopping sequence that time slot in which said transmitter is sending. Like frequency hopping, time hopping also reduces multiple access interference by averaging the load of the frequency range mainly between the cells. Thanks to time hopping, for instance a high power subscriber terminal located at the edge of a cell interferes only one channel of the next cell using the same frequency a little at a time, and not all the time a predetermined channel, which happens to be at the same frequency and in the same time slot. The effect of frequency hopping can be intensified by using time hopping, particularly in systems comprising too few frequencies to be used for frequency hopping. Such systems can be for instance developed TDMA cellular radio networks using broadband channels for data transmission. Table 1 shows how 8 different transmitters A, B, C, D, E, F, G, H in a 51 multiframe of a GSM system change their transmission time slot. A horizontal line shows the Time Slots (TS) #0 to #7 of one TDMA frame. Vertical direction shows how a 51 multiframe is formed of individual frames. Each individual frame has a sequence number (MF) #0 to #50 informing which one of the frames of the 51 multiframe is in question. In the first frame of the 51 multiframe, the transmitter A transmits in time slot 0, in the next frame in time slot 1, then in time slot 2, and so on. In frame 8 of the 51 multiframe, the time hopping sequence starts from the beginning again.

### BRIEF SUMMARY OF THE INVENTION

An object of the present invention is a method by which a neighbouring cell measurement is implemented in a TDMA cellular radio network using time hopping.

This is achieved by a method of the type presented in the introduction, which method is according to the invention characterized in that the at least one time slot to be measured of the TDMA frame, the slot containing a common control channel, is sent without time hopping at a constant transmission power.

Another object of the invention is a TDMA cellular radio network using time hopping, in which network a base station is arranged to send common control channels downlink in at least one time slot of a TDMA frame to a subscriber terminal, and the subscriber terminal is arranged to measure a neighbouring cell from the at least one time slot of the TDMA frame, the slot containing a common control channel. The system is according to the invention characterized in that the base station is arranged to transmit the at least one time slot to be measured of the TDMA frame, the slot containing a common control channel, without time hopping at a constant transmission power.

Considerable advantages are achieved by the method of the invention. The control channels to be measured most preferably need only one time slot at their disposal. Accordingly, it is not necessary to use a constant transmission power all the time at said frequency. The system thus has less interference, and therefore, a larger capacity. The other time slots at the measuring frequency can use power control and discontinuous transmission. If desired, frequency hopping as well may be used in the system according to the invention.

### BRIEF DESCRIPTION OF THE FIGURES

In the following, the invention is described in more detail referring to the examples of the attached drawings, in which
Figure 1 shows a TDMA cellular radio network using the invention,
Figure 2 shows a serving cell.
Figure 3 shows a block diagram of a base station,
Figure 4 shows a block diagram of an individual transceiver of the base station,
Figure 5 shows an implementation of time hopping according to the invention,
Figure 6 shows a block diagram of a subscriber terminal.

### DESCRIPTION OF PREFERRED EMBODIMENTS

The present invention is suitable for use in all TDMA cellular radio networks where time hopping can be used.

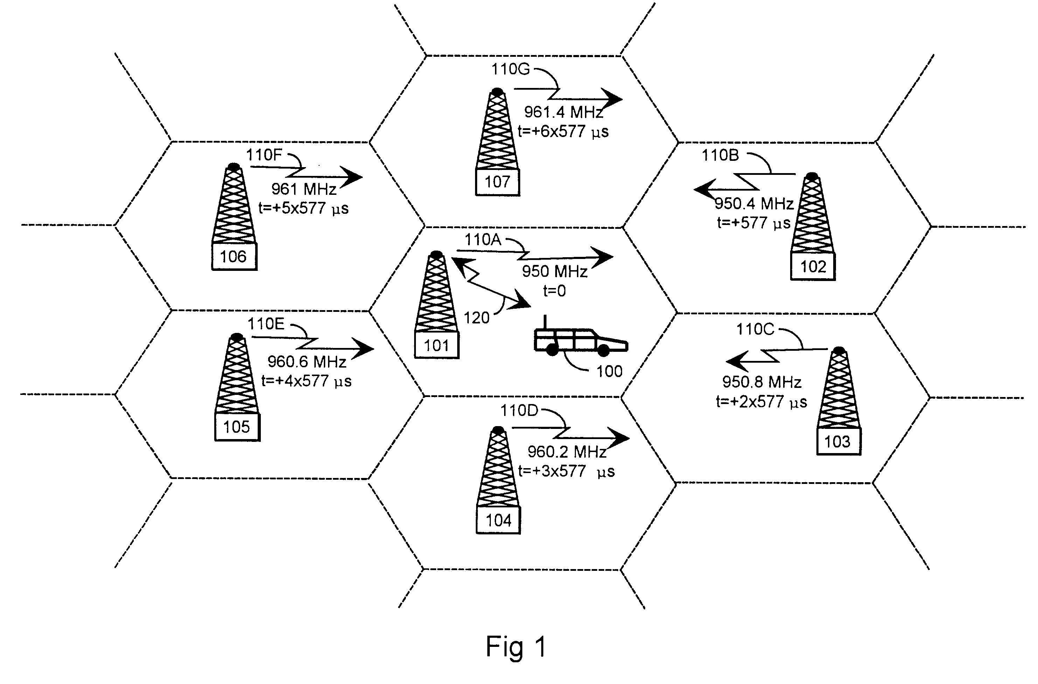

Figure 1 illustrates a measurement of a neighbouring cell. A base station 101 has a two-way radio connection 120 to a subscriber terminal 100, in this case located in a car. Each base station 101 to 107 has its cell, i.e. a theoretical coverage area of the base station shown as a hexagonal area in the figure. Each base station 101 to 107 sends common control channels 110A to 110G downlink, i.e. from the base station towards the subscriber terminal. The subscriber terminal 100 measures the power of the common control channels 110B to 110G it monitors; the subscriber terminal 100 can measure the quality from its radio connection 120 to the base station 101, without having to measure the common control channels 110A of the base station 101 of the serving cell. The information measured from the radio connection 120 has to be converted so as to be comparable with the information measured from the common control channels 110B to 110G of the neighbouring cells, the differences in power levels have to be considered as well. If the subscriber terminal 100 is not in a call state, the subscriber terminal 100 also monitors the common control channels 110A of its serving cell and simultaneously measures their power being directly proportional to the power of the common control channels 110B to 110G of the neighbouring cells. The subscriber terminal 100 reports the averaged measurement results of the best neighbouring base stations to the base station 101, and the base station system (most probably a base station controller) makes a decision on a handover on the basis of these results mainly.

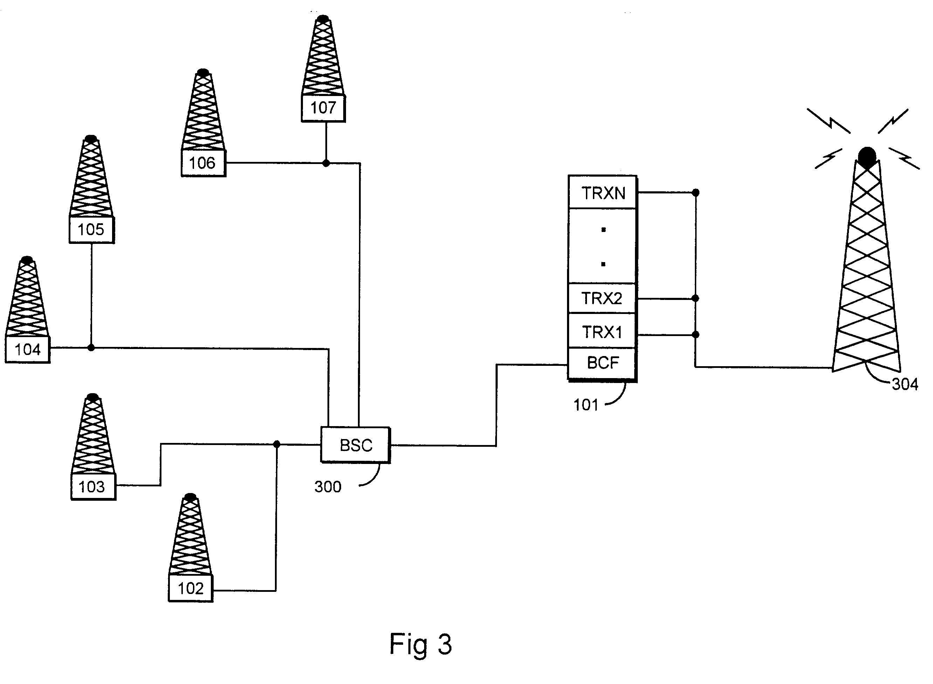

The structure of the base station 101 is described in Figure 3. Figure 3 comprises only the blocks which are essential for the description of the invention, but it is obvious for one skilled in the art that a conventional base station also comprises other functions and structures, which need not be described here in more detail. The base station may for instance be a base station of the type used in a GSM system, the base station comprising, however, the changes required by the invention. The base station 101 comprises a Base Station Control Function (BCF), which controls the operation of the whole base station 101 locally. On the other hand, several base stations 101 to 107 are controlled in a centralized manner by a Base Station Controller (BSC) 300 connected to the base stations. The object of a local control of the base station 101 is transceivers TRX1 to TRXN. The base station 101 typically comprises one to sixteen transceivers TRX1, TRX2, TRX3,...,TRX16. One transceiver TRX1 to TRXN offers radio capacity to one TDMA frame, i.e. typically to eight time slots.

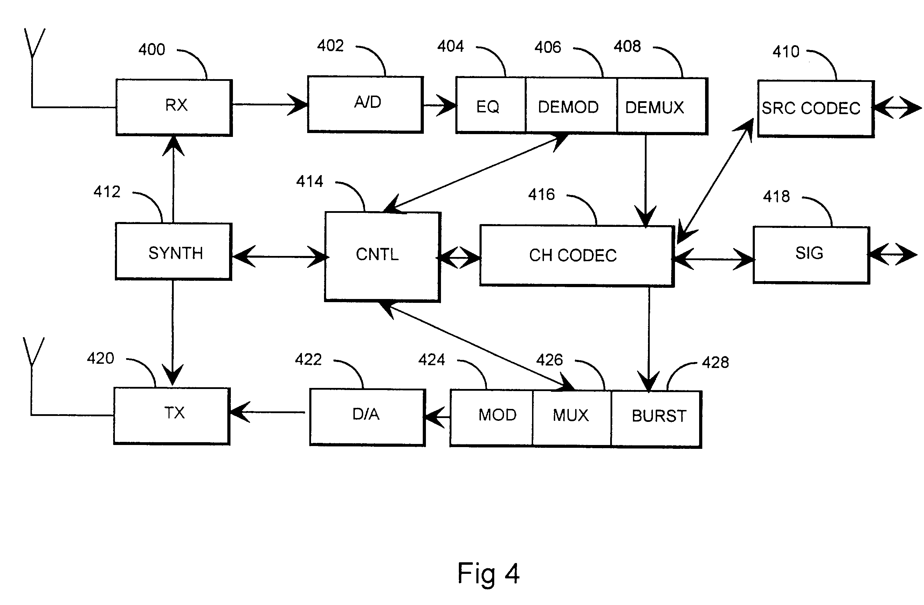

Figure 4 shows the structure of one transceiver TRX1 in more detail. A receiver 400 comprises a filter preventing frequencies outside a desired frequency band. Then a signal is converted to an intermediate frequency or directly to baseband, in which form the signal is sampled and quantized in an analog-to-digital converter 402. An equalizer 404 compensates for interference caused by multipath propagation, for example. From the equalized signal, a demodulator 406 takes a bit stream, which is transmitted to a demultiplexer 408. The demultiplexer 408 separates the bit stream from the separate time slots into its logic channels. A channel codec 416 decodes the bit stream of the separate logic channels, i.e. decides whether the bit stream is signalling information, which is transmitted to a signalling unit 418, or whether the bit stream is speech, which is transmitted to a speech codec 410. The channel codec 416 also performs error correction. A source codec 410 performs decoding of data, such as image or speech, received by the base station, and coding of data to be transmitted, respectively. Accordingly, coding and decoding signify for instance conversion of data containing speech from the form of a fixed network 64 kbit/s into another form (for instance 13 kbit/s) of a cellular radio network, and vice versa. The signalling unit 418 processes the signalling information between the network and the subscriber terminal. A control unit 414 performs inside control operations by controlling different units. A burst former 428 adds a training sequence and a tail to the data coming from the channel codec 416. A multiplexer 426 shows to each burst its time slot. A modulator 424 modulates digital signals to a radio frequency carrier. This operation has an analog nature, and therefore, a digital-to-analog-converter 422 is needed for performing it. A transmitter 420 comprises a filter, by which the bandwidth is restricted. Additionally, the transmitter 420 controls the output power of a transmission. A synthesizer 412 arranges the necessary frequencies for the different units. The synthesizer 412 contains a clock, which may be controlled locally or in a centralized manner from somewhere else, from the base station controller, for instance. The synthesizer 412 creates the necessary frequencies by a voltage-controlled oscillator, for instance.

If frequency hopping is used in a base station 101 described above, it can be implemented in two ways: as baseband hopping or as synthesizer hopping. If the base station 101 comprises several transceivers TRX1 to TRXN, each time slot is transferred to a transceiver TRX1 to TRXN operating at a predetermined baseband according to a frequency hopping sequence. If the base station comprises for instance one transceiver TRX1 only, an implementation of a desired frequency hopping requires that both the synthesizer 412 and the transmitter 420 are controlled to different frequencies for transmitting each time slot at a frequency according to the frequency hopping sequence.

Time hopping is implemented at the base station 101 described above in such a way that the multiplexer 426 shows in the transceiver TRX1 for each burst its time slot according to a time hopping sequence controlled by the control unit 414.

The base station 101 is arranged to transmit the common control channels downlink by using at least one time slot of a TDMA frame. According to the invention, the base station 101 is further arranged to transmit, in a manner enabling a measurement of a neighbouring base station, at least one time slot of the TDMA frame, the slot containing a common control channel, without time hopping at a constant transmission power. In the base station described, this can be implemented for instance in such a way that the control function BCF of the base station controls the common control channels for instance to the first transceiver TRX1. In this transceiver TRX1, the control unit 414 controls the multiplexer 426 to locate the common control channels, or at least those control channels from which a measurement of a neighbouring base station can be performed, always in the same time slot of the TDMA frame, i.e. said time slot does not participate in time hopping. The transmitter 420 is controlled to transmit said measuring time slot always at the same constant transmission power. Typically, the control function BCF of the base station and the control unit 414 of the transceiver TRX1 are implemented by signal processors or general processors. The functions required by the invention are then preferably implemented as a software. The implementation can also be performed for instance by a separate logic or an ASIC circuit or some other HW-based solution. The main principle according to the invention remains the same, however.

The system of the invention can use frequency hopping as well to intensify the capacity and efficiency of the system. Then the system is arranged to perform frequency hopping in the manner described above. A time slot of a TDMA frame, the slot containing a common control channel, may also perform frequency hopping.

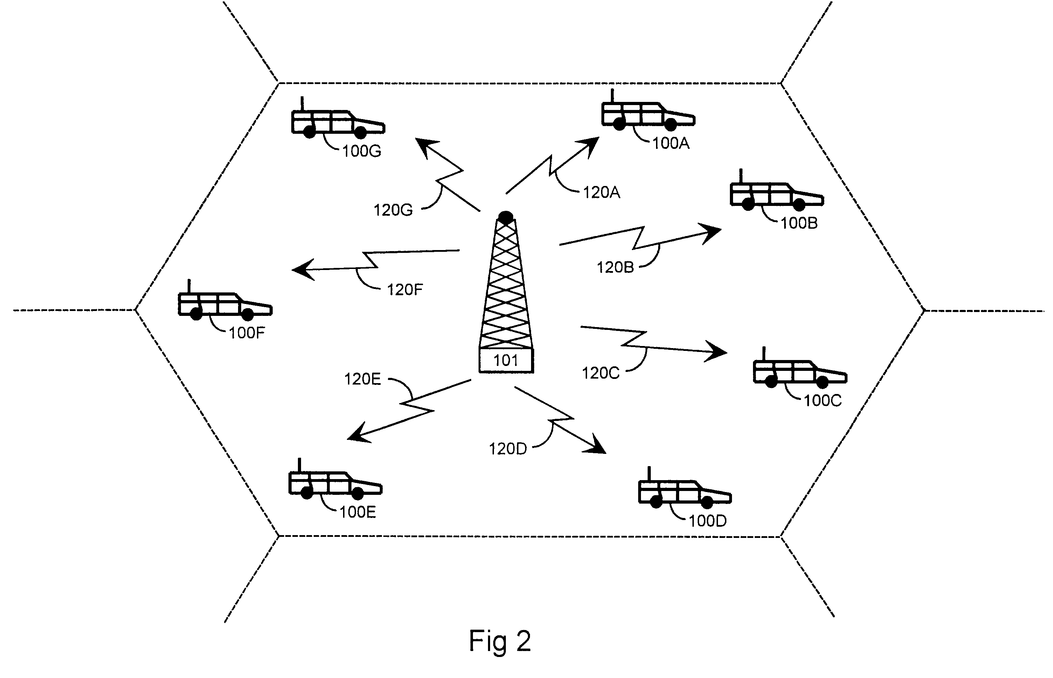

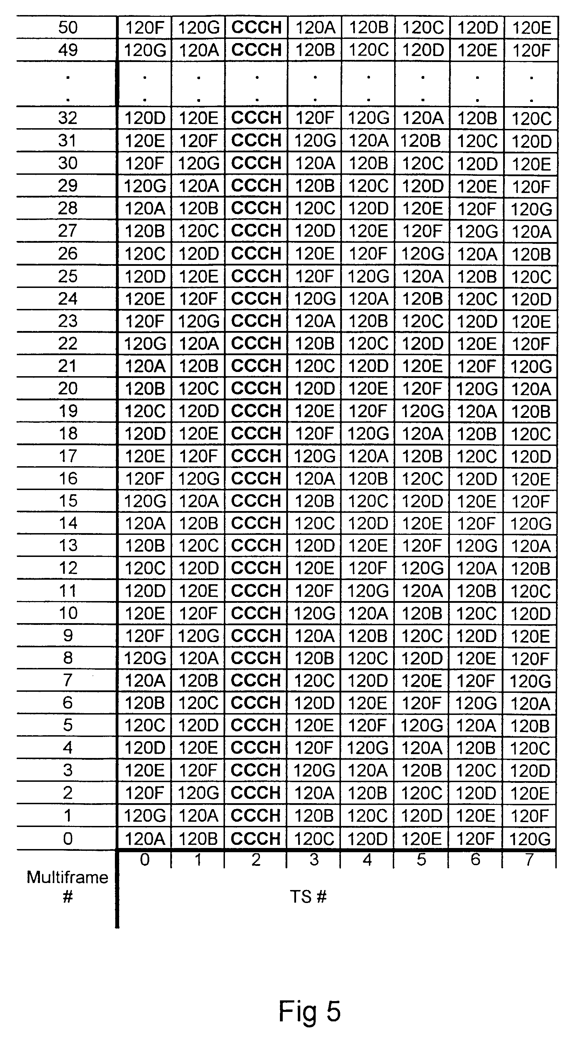

Figures 2 and 5 illustrate how time hopping is implemented according to the invention. A base station 101 has a connection 120 A to 120 G to seven subscriber terminals 100A to 100G. Figure 5 shows how the time slot of a transmission of each subscriber terminal is changed in accordance with a time hopping sequence. The horizontal level illustrates the 8 time slots TS #0 to #7 of one TDMA frame. The vertical direction shows how a 51 multiframe is formed of 51 TDMA frames #0 to #50. In said example, time slot #2 is chosen to transmit common control channels CCCH. Any other time slot #0 to #7 could also be used, of course. The time hopping sequence is of the same type as in the example of Table 1. In the first frame #0 of the 51 multiframe, the downlink radio connection 120 A of the subscriber terminal 100A is in time slot #0, the radio connection 120 B of the subscriber terminal 100B in time slot #1, the common control channels CCCH are in time slot #2, the radio connection 120 C of the subscriber terminal 100C is in time slot #3, and so on. In the following frame #1, the time slot of each radio connection 120A to 120G has been increased by one, but in such a way that time slot #2 is not used, and if the time slot has been #7 last time, the next time slot is #0. From frame #8 on, the time hopping sequence starts being repeated cyclicly from the beginning again. The time hopping sequence can be cyclic, as described above, or another alternative is that the time hopping sequence is pseudorandom. However, the base station 101 to 107 has been arranged to use the same time hopping sequence, but a different offset, for each radio connection to the subscriber terminal inside the cell. In this example, a frame structure with eight time slots and a multiframe structure with 51 frames have been used, but frame structures and multiframe structures of another kind can be used as well.

To facilitate the measurement of a neighbouring base station performed by the subscriber terminal 100, the base stations 102 to 107 in the neighbouring cells can be arranged to transmit the time slots to be measured of a TDMA frame, the slots containing a common control channel, at different times. The network is then preferably synchronic, meaning that the transmissions of the base stations 101 to 107 take place essentially at the same moments. In the example of Figure 1, the base station 101 transmits the control channels 110A at the frequency 950 MHz at the moment 0, the base station 102 the control channels 110B at the frequency 950.4 MHz at the moment +577 µs (= duration of one time slot of a TDMA frame), and so on. Accordingly, each base station 101 to 107 then transmits its control channels 110A to 110G in different time slots, and because the network is synchronic, the transmissions do not take place at the same moment. The subscriber terminal 100 can then measure the control channels 110 B to 110 G of the neighbouring cells more effectively, because they are not temporally overlapping. Even if some of the control channels 110B to 110G were temporally overlapping with the traffic channels used for the radio connection 120 between the subscriber terminal 100 and the base station 101, the situation would not, however, disturb the measurement permanently, because said traffic channels perform time hopping.

Another possibility of implementing the timing of transmissions of the control channels in such a way that the transmissions occur at different moments is that, among the base stations 101 to 107 of the neighbouring cells, the timing offset is known. Then the base stations subject to one base station controller are in a way synchronized with each other and the transmission of the control channels can be planned so as to facilitate the neighbouring measurement.

In a preferred embodiment, the base station 101 is arranged to transmit at least one neighbouring time slot of a time slot to be measured of a TDMA frame, the slot containing a common control channel, at a constant transmission power. This facilitates the measurement of the base station of the neighbouring cell performed by the subscriber terminal 100, because the duration of a measuring window then is longer. In the example of Figure 5, for instance, time slot #1, or even both time slots #1 and #3, could also be transmitted at a constant transmission power. Then the duration of the measuring window would increase from one time slot to two or even three time slots.

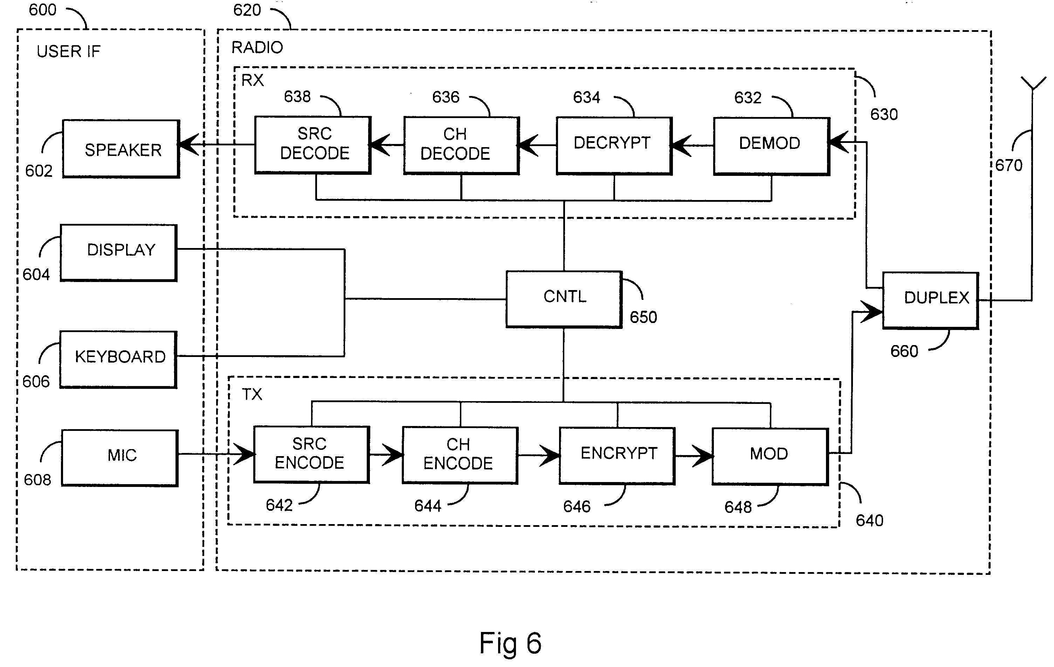

The subscriber terminal 100 is any subscriber terminal according to the prior art. Let us examine Figure 6, which illustrates the structure of a possible subscriber terminal 100 in a simplifying manner. The subscriber terminal 100 comprises an operation part 600, a radio part 620, a control unit 650 and an antenna 670. The task of the operation part 600 is to function as a user interface of a subscriber terminal 604. The task of the radio part 620 is to convert a signal to be transmitted suitable for a radio connection 120 and to convert a received signal understandable for the user, respectively. The antenna 670 receives a signal from the radio connection 120 and transmits a signal to the radio connection 120. The operation part 600 comprises a loudspeaker 602, a display 604, a keyboard 606 and a microphone 608. The radio part 620 comprises a receiver 630, a transmitter 640, a control part 650 and a duplex filter 660. The receiver 630 comprises a demodulator 632, a decryptor 634, a channel decoder 636 and a source decoder 638. The transmitter comprises a source coder 642, a cryptor 644, a channel coder 646 and a modulator 648.

The signal is received by the antenna 670, from which it is applied over the duplex filter 660 to the receiver 630. Initially, the signal is demodulated in the demodulator 632. Then the encryption is decrypted in the decryptor 634. After that, the signal is decoded in the channel decoder 636. Finally, the received information is converted presentable in the source decoder 638. Speech information is brought to the loudspeaker 602 and the signalling sent from the base station is processed in the control unit 650. Other data possibly received, for instance an image, is brought over an interface (not shown) of the subscriber terminal to further processing, to a portable computer, for instance. When an information to be transmitted arrives from the microphone 608 and the control unit 650 to the transmitter 640, the speech information is digitized, and subsequently, code words are created in the source coder 642 from the digitized speech information and signalling. Then the data to be transmitted is coded in the channel coder 644, after which an encryption is performed by the cryptor 646. After this, the data is modulated in the modulator 648. Finally, the data to be transmitted is brought over the duplex filter 660 to the antenna 670.

It is essential for the invention that the control unit 650 controls the units to which it has a connection in the figure. The control part 650 is typically implemented by a general processor and software. The invention requires changes in the software, which controls how the subscriber terminal 100 measures neighbouring base stations. The subscriber terminal is arranged to create a measuring moment in accordance with the measuring frequency information received from the base station of the serving cell on control channels and/or the identity information of the base station, by using a predetermined rule or equation.

Though the invention has above been described referring to the example of the attached drawings, it is obvious that the invention is not restricted to that, but it can be varied in many ways within the scope of the inventive idea of the attached claims.

## Claims

1. Method of measuring neighbouring cells in a TDMA cellular radio network using time hopping, in which network a base station sends common control channels in at least one time slot of a TDMA frame downlink to a subscriber terminal and the subscriber terminal measures a neighbouring cell from the at least one time slot of the TDMA frame, the slot containing a common control channel, **characterized** in that the at least one time slot to be measured of the TDMA frame, the slot containing a common control channel, is sent without time hopping at a constant transmission power.

2. Method according to claim 1, **characterized** in that the time slots to be measured of the TDMA frame, the slots containing a common control channel, are not simultaneous in the neighbouring cells.

3. Method according to claim 2, **characterized** in that the TDMA cellular radio network is synchronic.

4. Method according to claim 2, **characterized** in that the timing offset between the base stations of the neighbouring cells is known.

5. Method according to claim 1, **characterized** in that time hopping uses a pseudorandom time hopping sequence.

6. Method according to claim 1, **characterized** in that time hopping uses a cyclic time hopping sequence.

7. Method according to claim 1, **characterized** in that the same time hopping sequence, but a different offset, is used inside the cell for each radio connection,

8. Method according to claim 1, **characterized** in that the transmission power of at least one neighbouring time slot of the time slot to be measured of the TDMA frame, the slot containing a common control channel, is constant.

9. Method according to any preceding claim, **characterized** in that the subscriber terminal creates a measuring moment according to the measuring frequency and/or the identity of the base station by using a predetermined rule or equation.

10. Method according to any preceding claim, **characterized** in that frequency hopping is used, whereby also the at least one time slot to be measured of the TDMA frame, the slot containing a common control channel, performs frequency hopping.

11. TDMA cellular radio network using time hopping, in which network a base station is arranged to send common control channels in at least one time slot of a TDMA frame downlink to a subscriber terminal, and the subscriber terminal is arranged to measure a neighbouring cell from the at least one time slot of the TDMA frame, the slot containing a common control channel, **characterized** in that the base station is arranged to transmit the at least one time slot to be measured of the TDMA frame, the slot containing a common control channel, without time hopping at a constant transmission power.

12. System according to claim 11, **characterized** in that the base stations of the neighbouring cells are arranged to transmit the time slots to be measured of the TDMA frame, the slots containing a common control channel, at different times.

13. System according to claim 12, **characterized** in that the TDMA cellular radio network is synchronic.

14. System according to claim 12, **characterized** in that the timing offset between the base stations of the neighbouring cells is known.

15. System according to claim 11, **characterized** in that the base station is arranged to use a pseudorandom time hopping sequence for time hopping.

16. System according to claim 11, **characterized** in that the base station is arranged to use a cyclic time hopping sequence for time hopping.

17. System according to claim 11, **characterized** in that the base station is arranged to use the same time hopping sequence, but a different offset, for each radio connection inside the cell.

18. System according to claim 11, **characterized** in that the base station is arranged to transmit at least one neighbouring time slot of the time slot to be measured of the TDMA frame, the slot containing a common control channel, at a constant transmission power.

19. System according any preceding claim 11 to 18, **characterized** in that the subscriber terminal is arranged to create a measuring moment according to the measuring frequency and/or the identity of the base station by using a predetermined rule or equation.

20. System according to any preceding claim 11 to 19, **characterized** in that the base station is arranged to use frequency hopping, whereby the at least one time slot to be measured of the TDMA frame, the slot containing a common control channel, also performs frequency hopping.
